# EUROPÄISCHE PATENTSCHRIFT

(11) **EP 2 598 853 B1**
(45) Veröffentlichungstag und Bekanntmachung des Hinweises auf die Patenterteilung: **28.10.2015**
(21) Anmeldenummer: 11754308.2
(22) Anmeldetag: 19.07.2011
(51) Int. Cl.: G01K 11/26, G01L 1/16, G01L 9/00, G01L 9/08

(54) **VERFAHREN ZUR ANSTEUERUNG PASSIVER SENSORELEMENTE**
METHOD FOR conttolling PASSIVE SENSOR ELEMENTS
PROCÉDÉ DE COMMANDE D'ÉLÉMENTS CAPTEURS PASSIFS

(30) Priorität: 28.07.2010 AT 12652010
(43) Veröffentlichungstag der Anmeldung: 05.06.2013
(73) Patentinhaber: Siemens AG Österreich, 1210 Wien (AT)
(72) Erfinder: GILA, Janos, A-2340 Mödling (AT); HLADIK, Reinhard, A-1210 Wien (AT)
(74) Vertreter: Maier, Daniel Oliver
(86) Internationale Anmeldenummer: PCT/EP2011/062337
(87) Internationale Veröffentlichungsnummer: WO 2012/013540

(56) Entgegenhaltungen:
- EP-A2- 1 708 540
- US-A1- 2005 007 239
- Matthias: "Interrogation Unit for Wireless Surface Acousitc Wave Sensors", , 7. August 2007 (2007-08-07), XP002662560, Gefunden im Internet: URL:http://www.glyxstern.de/projekte/beruf /26-interrogation-unit-for-wireless-surfac e-acoustic-wave-sensors-english [gefunden am 2011-11-01]

## Beschreibung

Die Erfindung betrifft ein Verfahren zur Ansteuerung passiver Sensorelemente, insbesondere von OFW-Resonatoren, bei dem eine Ansteuerschaltung mit einer Sendeeinheit zur Aussendung eines Anregungssignals und mit einer Empfangseinheit zum Empfang und zur Auswertung des Antwortsignals des Sensors vorgesehen ist, und wobei Sendeeinheit und Empfangseinheit eine gemeinsame Antenne aufweisen, die über ein Schalterelement während eines Sendezeitraums mit der Sendeeinheit und während eines Empfangszeitraumes mit der Empfangseinheit verbunden ist.

Die Schrift "Interrogation Unit for Wireless Surface Acoustic Wave Sensors", Matthias, 7. August 2007 beschreibt ein solches Verfahren.

Der Einsatz von Oberflächenwellen (OFW)-Resonatoren oder nach anderer Bezeichnung SAW-Sensoren als Temperatursensoren hat sich auch bei anspruchsvollen Umgebungsbedingungen bewährt.

Diese Elemente beruhen darauf, dass sich mittels Elektrodenstrukturen auf der Oberfläche von Piezokristallen Schallwellen erzeugen lassen, die sich auf der Substratoberfläche ausbreiten. Durch die Gestalt der Elektroden oder anderen Formparametern können Frequenzen selektiert werden.

Mit geeigneten weiteren Elektrodenstrukturen wird die akustische Oberflächenwelle wieder in elektrische Signale umgewandelt.

Beim Einsatz als OFW-Sensoren wird die Abhängigkeit der Oberflächenwellengeschwindigkeit von der mechanischen Spannung (Verformung), der Massenbeaufschlagung (Ablagerungen auf der Oberfläche) oder der Temperatur (Temperaturkoeffizient der Schallgeschwindigkeit) genutzt.

Auf eine Anregung mit einem HF-Signal in der Nähe seiner Resonanzfrequenz antwortet daher der OFW-Resonator mit einem Signal, dessen Frequenz eine Aussage über die Umgebungstemperatur, die mechanische Spannung, oder aber beispielsweise in Verbindung mit einem druckabhängigen Kondensator über den Umgebungsdruck liefert.

Die Anregung erfolgt üblicherweise mit einem Hochfrequenzsignal mit hoher Leistung von bis zu einem Watt. Die durch den OFW-Resonator aufgenommene Energie wird nach dem Abschalten des Anregungssignals als Antwortsignal mit der Resonanzfrequenz des OFW-Resonators abgestrahlt. Die typische Zeitdauer des Antwortsignals beträgt etwa 10 µsec. In dieser Zeit muss im Empfänger das Antwortsignal ausgewertet werden. Erschwert wird diese Aufgabe auch dadurch, dass der Pegel des Antwortsignales vergleichsweise schwach ist und etwa 60 dB unter dem Pegel des Anregungssignals liegt, also etwa 1 µW Leistung aufweist.

Dies ist vor allem dann problematisch, wenn Sende und Empfangseinheit eines Messsystems mit OFW-Resonatoren eine bauliche Einheit bilden sollen, d.h. dass sowohl bei der Anregung als auch beim Empfang der Antwortsignale dieselben elektronischen Elemente genutzt werden sollen.

Der Erfindung liegt daher die Aufgabe zugrunde, die die Empfangseigenschaften eines Messsystems mit OFW-Resonatoren zu erhöhen.

Erfindungsgemäß geschieht dies mit einem eingangs genannten Verfahren bei dem beim Übergang von Sendezeitraum zu Empfangszeitraum zusätzlich zum Umschalten der Antenne auch eine Verstellung der Frequenz der Sendeeinheit erfolgt.

Mit dem erfindungsgemäßen Verfahren kann die begrenzte Isolationswirkung des Schalterelementes durch die Filtereigenschaften der Empfangseinheit erheblich verbessert werden.

Dabei kann bei Kenntnis dieser Filtereigenschaften und gezielte Verstellung der Frequenz der Sendeeinheit ein vorgegebener Dämpfungswert erzielt werden.

So wird bei Verstellung der Frequenz der Sendeeinheit um einen Betrag, der größer ist als die halbe Bandbreite eines Zwischenfrequenzfilters einer Demodulatoreinheit der Empfangseinheit bei typischen Zwischenfrequenzfiltern ein Dämpfungswert von mehr als 40 dB erzielt.

Damit ist das Verfahren besonders für den Einsatz unter anspruchsvollen Bedingungen, wie bei der Messung von Temperatur und Druck in Endlospressgütern geeignet.

Die Erfindung wird anhand von Figuren näher erläutert.

Es zeigen beispielhaft:
Fig. 1 schematisch eine erfindungsgemäße Ansteuerschaltung und
Fig. 2 den zeitlichen Verlauf von Anregungs- und Antwortsignal.

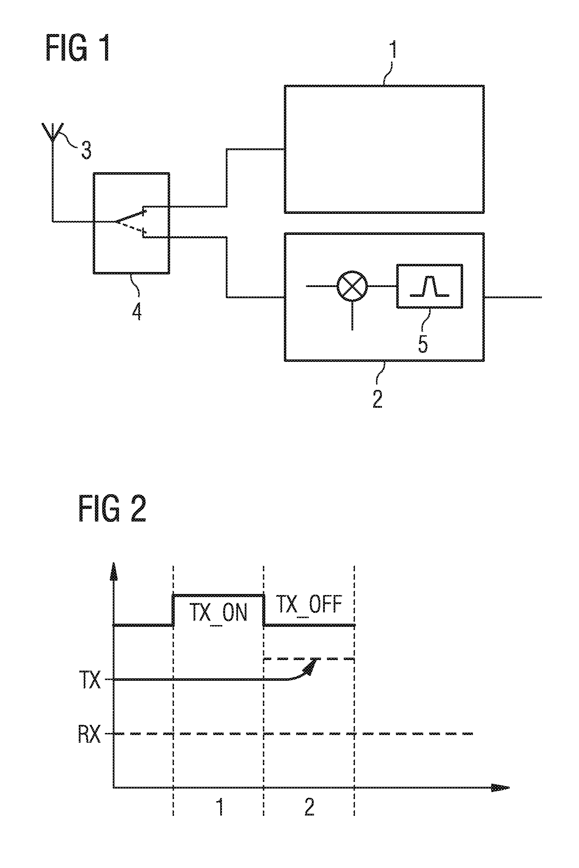

Die Ansteuerschaltung nach Fig. 1 zur Ansteuerung passiver Sensorelemente, insbesondere von OFW-Resonatoren, umfasst eine Sendeeinheit 1 zur Aussendung eines Anregungssignals und eine Empfangseinheit 2 zum Empfang und zur Auswertung des Antwortsignal des Sensors, sowie eine gemeinsame Antenne 3, die über ein hochisolierendes Schalterelement 4, beispielsweise des Typs ZASWA-2-50DR+ von der Firma Mini-Circuit, während eines Sendezeitraums mit der Sendeeinheit 1 und während eines Empfangszeitraumes mit der Empfangseinheit 2 verbunden ist.

Die Empfangseinheit weist eine übliche - nicht näher dargestellte Demodulatoreinheit mit einem Zwischenfrequenzfilter 5 auf.

Der Ablauf des erfindungsgemäßen Verfahrens wird anhand der Figur 2 näher erläutert. Diese Figur zeigt anhand einer schematischen Darstellung den Verlauf der Frequenz des Anregungssignals TX, sowie die Zeitabschnitte TX ON, in denen dieses Signal TX an die Antenne durchgeschaltet ist, und die Ausschaltzeiten TX_OFF, in denen die Antenne auf die Empfangseinheit 2 durchgeschaltet ist, sowie das Antwortsignal RX des OFW Resonators mit der Resonanzfrequenz, die während des Ablaufs des Verfahrens als annähernd konstant angenommen wird.

Während der Aussendung des Anregungssignals TX in einem ersten Zeitabschnitt 1 weist dieses Signal eine erste Frequenz auf, die weitgehend der erwarteten Frequenz des Antwortsignals entspricht, bzw. im Idealfall mit diesem übereinstimmt.

Im Übergang zum zweiten Zeitabschnitt 2 wird durch das Schalterelement 4 die Sendeeinheit 1 von der Antenne 3 getrennt und die Empfangseinheit 2 mit der Antenne 3 verbunden. Die Empfangseinheit 2 ist damit bereit zum Empfang und zur Auswertung des Antwortsignals des passiven Sensorelements, beispielsweise eines OFW-Resonators.

Erfindungsgemäß wird nun die Dämpfungswirkung des Schalterelements dadurch erhöht, dass im Übergang zusätzlich zum Umschalten der Antenne 3 auch eine Verstellung der Frequenz der Sendeeinheit 1 erfolgt.

Damit können die Filtereigenschaften der Empfangseinheit, die wesentlich durch das Zwischenfrequenzfilter 5 bestimmt sind, zur Erhöhung der Dämpfungseigenschaften des Gesamtsystems genutzt werden.

Die Verstellung der Frequenz der Sendeeinheit kann vergleichsweise schnell erfolgen, sodass die vollen Dämpfungseigenschaften in einem Zeitraum vorliegen, der deutlich kürzer ist, als die typische Zeitdauer des Antwortsignals von etwa 10 µsec.

### Bezugszeichenliste

Sendeeinheit 1
Empfangseinheit 2
gemeinsame Antenne 3
Schalterelement 4
Zwischenfrequenzfilter 5
Anregungssignal TX
Antwortsignal RX
Zeitraum, in dem das Anregungssignal TX an die Antenne durchgeschaltet ist TX_ON
Ausschaltzeiten TX_OFF

## Patentansprüche

1. Verfahren zur Ansteuerung passiver Sensorelemente, insbesondere von OFW-Resonatoren, bei dem eine Ansteuerschaltung mit einer Sendeeinheit zur Aussendung eines Anregungssignals und mit einer Empfangseinheit zum Empfang und zur Auswertung des Antwortsignals des Sensors vorgesehen ist, und wobei Sendeeinheit und Empfangseinheit eine gemeinsame Antenne aufweisen, die über ein Schalterelement während eines Sendezeitraums mit der Sendeeinheit und während eines Empfangszeitraumes mit der Empfangseinheit verbunden ist, **dadurch gekennzeichnet, dass** beim Übergang von Sendezeitraum zu Empfangszeitraum zusätzlich zum Umschalten der Antenne auch eine Verstellung der Frequenz der Sendeeinheit erfolgt.

2. Verfahren nach Anspruch 1, **dadurch gekennzeichnet, dass** die Verstellung der Frequenz der Sendeeinheit um einen Betrag erfolgt, der so gewählt ist, dass aufgrund der Filtereigenschaften der Empfangseinheit eine vorgegebene zusätzliche Dämpfung des Sendesignals erzielt wird.

3. Verfahren nach Anspruch 2, **dadurch gekennzeichnet, dass** die Verstellung der Frequenz der Sendeeinheit um einen Betrag erfolgt der größer ist als die halbe Bandbreite eines Zwischenfrequenzfilters einer Demodulatoreinheit der Empfangseinheit.

4. Verfahren nach einem der Ansprüche 1 bis 3, **dadurch gekennzeichnet, dass** das Verfahren zur Messung von Temperatur und Druck in Endlospressgütern vorgesehen ist.

5. Verfahren nach einem der Ansprüche 1 bis 4, **dadurch gekennzeichnet, dass** als Schalterelement ein hochisolierender HF-Schalter vorgesehen ist.

## Claims

1. Method for controlling passive sensor elements, especially SAW resonators, in which a control circuit with a transmitting unit for transmitting an excitation signal and with a receiving unit for receiving and for evaluating the response signal of the sensor is provided, and wherein transmitting unit and receiving unit have a common antenna, which is connected via a switching element to the transmitting unit during a transmitting period and to the receiving unit during a receiving period, **characterised in that** when transitioning from transmitting period to receiving period, in addition to the switching of the antenna, the frequency of the transmitting unit is also shifted.

2. Method according to claim 1, **characterised in that** the frequency of the transmitting unit is shifted by an amount which is selected such that a predefined additional attenuation of the transmission signal is achieved on the basis of the filter properties of the receiving unit.

3. Method according to claim 2, **characterised in that** the frequency of the transmitting unit is shifted by an amount which is greater than half of the bandwidth of an intermediate frequency filter of a demodulator unit of the receiving unit.

4. Method according to one of claims 1 to 3, **characterised in that** the method for measurement of temperature and pressure in endless pressed goods is provided.

5. Method according to one of claims 1 to 4, **characterised in that** a highly-insulating HF switch is provided as switching element.

## Revendications

1. Procédé de commande d'éléments capteurs passifs, en particulier de résonateurs à ondes de surface, dans lequel est prévu un circuit de commande comprenant une unité d'émission pour émettre un signal d'excitation et une unité de réception pour recevoir et pour évaluer le signal de réponse du capteur, l'unité d'émission et l'unité de réception comportant une antenne commune qui est reliée, par l'intermédiaire d'un élément commutateur, durant une période d'émission à l'unité d'émission et durant une période de réception à l'unité de réception, **caractérisé en ce que** lors de la transition de la période d'émission à la période de réception, il se produit en plus de la commutation de l'antenne également un changement de fréquence de l'unité d'émission.

2. Procédé selon la revendication 1, **caractérisé en ce que** le changement de fréquence de l'unité d'émission est opéré pour une valeur choisie de façon à obtenir, grâce aux propriétés de filtrage de l'unité d'émission, une atténuation supplémentaire prédéfinie du signal d'émission.

3. Procédé selon la revendication 2, **caractérisé en ce que** le changement de fréquence de l'unité d'émission est opéré pour une valeur supérieure à la moitié de la bande passante d'un filtre à fréquence intermédiaire d'une unité de démodulation.

4. Procédé selon l'une des revendications 1 à 3, **caractérisé en ce que** le procédé est prévu pour mesurer la température et la pression dans les matières à presser en continu.

5. Procédé selon l'une des revendications 1 à 4, **caractérisé en ce qu'**il est prévu comme élément commutateur un commutateur HF à haute isolation.
